# FASCICULE DE BREVET EUROPEEN

(11) **EP 1 285 229 B1**
(45) Date de publication et mention de la délivrance du brevet: **07.02.2007**
(21) Numéro de dépôt: 01936516.2
(22) Date de dépôt: 15.05.2001
(51) Int. Cl.: G01C 19/56, G01P 9/04

(54) **STRUCTURE VIBRANTE A DEUX OSCILLATEURS COUPLES, NOTAMMENT POUR UN GYROMETRE**
VIBRATIONSSTRUKTUR MIT ZWEI GEKOPPELTEN OSZILLATOREN, INSBESONDERE FÜR EINEN KREISEL
VIBRATING STRUCTURE COMPRISING TWO COUPLED OSCILLATORS, IN PARTICULAR FOR A GYRO

(30) Priorité: 16.05.2000 FR 0006202
(43) Date de publication de la demande: 26.02.2003
(73) Titulaire: COMMISSARIAT A L'ENERGIE ATOMIQUE, 75015 Paris (FR)
(72) Inventeur: ORSIER, Elisabeth, F-38000 Grenoble (FR)
(74) Mandataire: Ilgart, Jean-Christophe
(86) Numéro de dépôt international: PCT/FR2001/001466
(87) Numéro de publication internationale: WO 2001/088478

(56) Documents cités:
- WO-A-96/39614
- US-A- 5 241 861

## Description

On traitera ici d'une structure vibrante, et plus précisément d'une structure fabriquée par les techniques de micro-usinage, en général de très petite taille, et dont les caractéristiques essentielles sont qu'elle est d'un seul bloc et que les masses sont couplées.

Une application courante de telles structures vibrantes est de servir d'élément sensible à un gyromètre capacitif. Elles comprennent deux masses qui vibrent dans un plan commun et une même direction, mais en opposition de phase, et qui sont rattachées par des poutres ou lames flexibles à une portion plus rigide de la structure. L'application d'un champ électrique alternatif entre les masses et des portions fixes de la structure qui leur sont adjacentes assure le déplacement oscillant des masses. Si la structure est soumise à un mouvement de rotation autour d'un axe perpendiculaire à la direction d'oscillation mais appartenant au plan d'oscillation, les forces de Coriolis se manifestent par des déplacements des masses, proportionnels à la vitesse de rotation dans une direction perpendiculaire au plan d'oscillation. Ces déplacements peuvent être estimés si les masses et les portions adjacentes et fixes de la structure, situées dans la direction de déplacement, sont construites en condensateur, car ils peuvent être corrélés à des variations de capacité qu'il est facile de mesurer.

Un problème qu'on rencontre avec ces structures vibrantes provient des imprécisions d'usinage, des dissymétries inévitables entre les masses, de l'influence de leurs éléments d'attache, des contraintes résiduelles qui rendent difficile de leur donner exactement la même fréquence propre, et de leur imposer des déplacements exactement en opposition de phase. C'est pourquoi le document WO 96 39614 divulgue une telle structure vibrante, dans laquelle les masses sont reliées entre elles par un système de couplage comprenant, de chaque côté, une poutre flexible en forme d'arc et une poutre parallèle à la direction d'oscillation, dont les extrémités sont fixées à la partie rigide de la structure et dont le milieu est uni au sommet de la poutre en arc. Les oscillations produisent des déformations de ces poutres de couplage, mais les mouvements en opposition de phase produisent une déformation symétrique qui, pour cette forme particulière, déforme les poutres de couplage de façon plus simple et en absorbant moins d'énergie que ne le feraient des déplacements égaux, mais en phase, des masses. Le système de couplage, plus souple à l'égard des déplacements en opposition de phase, favorise donc ceux-ci.

On peut cependant reprocher à cette conception une forme dissymétrique des poutres qui retiennent les masses, une sensibilité du système à des imprécisions d'usinage responsable de dissymétries entre les masses, une moins grande liberté du choix des géométries des différentes poutres du système de couplage proposé comparé à l'invention présentée ici. Cette conception impose également une façon de fixer le dispositif, par des ancrages, qui ne favorise pas autant le déplacement des masses sous la force de Coriolis que l'exemple de l'invention proposée rend possible, et donc ne favorise pas autant une grande sensibilité de mesure.

L'invention permet de proposer une solution meilleure sous ces aspects, et rend possible un couplage de deux oscillateurs à la différence de phase voulue.

Sous sa forme la plus générale, l'invention concerne une structure vibrante, selon la revendication 1. Elle se distingue du document EP A 1 098 170 en ce que des moyens de couplage matériels, comprenant des poutres, y sont définis.

Dans un mode préféré de réalisation, les moyens de couplage de deux des oscillateurs comportent au moins un ensemble de couplage formé par :
- des moyens d'attache de chaque oscillateur au support rigide,
- des poutres permettant de relier les moyens d'attache au support rigide tout en assurant un transfert de mouvement d'au moins un des pivots d'un oscillateur vers au moins un des pivots de l'autre desdits deux oscillateurs.

Fréquemment, la structure comporte deux ensembles de couplage, chaque ensemble reliant symétriquement l'ensemble des oscillateurs de la structure.

Dans une construction particulière, les poutres des moyens de couplage comprennent au moins deux poutres intermédiaires prolongeant des extrémités des bras et une poutre médiane reliant les poutres intermédiaires entre elles ; il est alors possible que les poutres intermédiaires soient obliques à la poutre médiane.

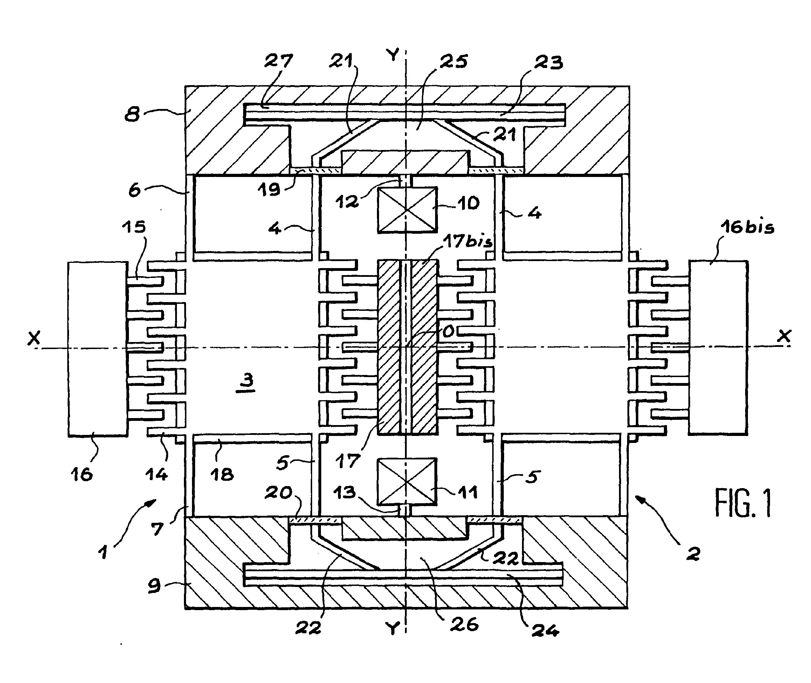

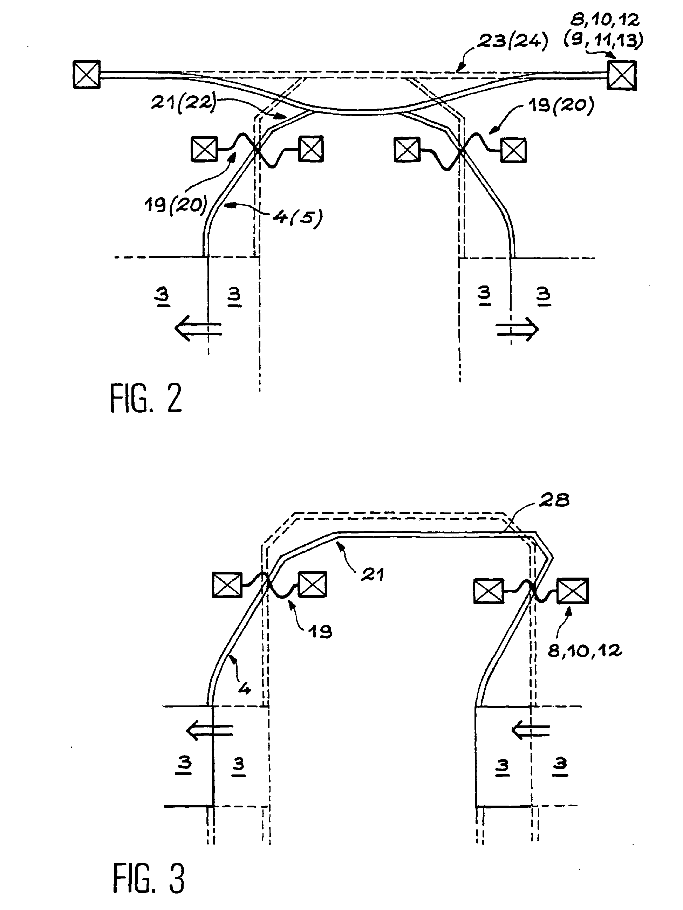

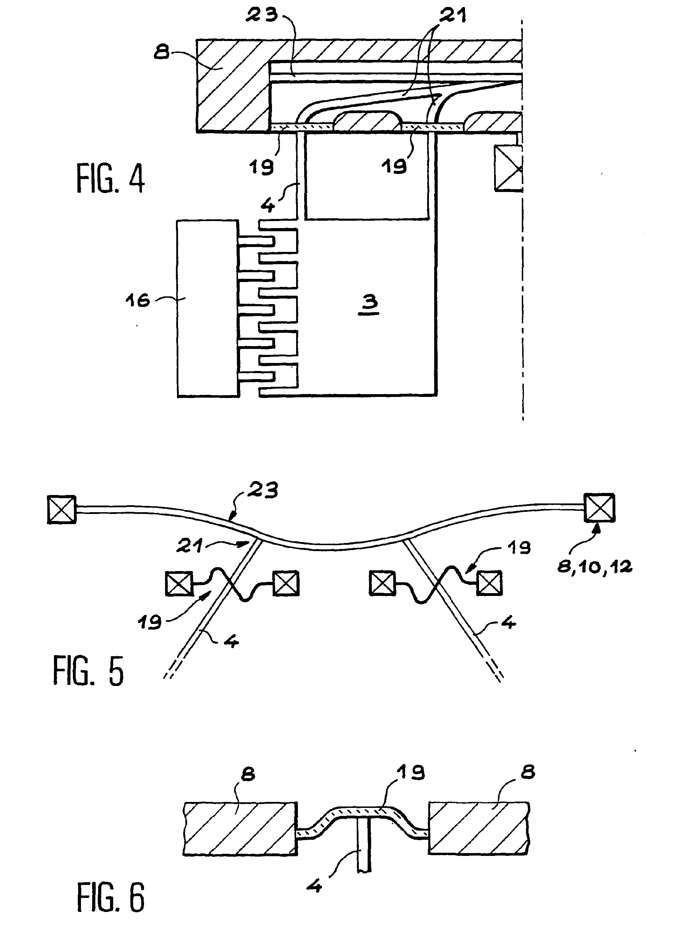

L'invention sera maintenant décrite plus en détail au moyen des figures suivantes, qui feront mieux apparaître ses caractéristiques, aspects et avantages :
■ la figure 1 est une vue générale d'une réalisation de l'invention, vue dans une direction perpendiculaire au plan d'oscillation ;
■ et les figures 2, 3, 4, 5 et 6 illustrent le fonctionnement de quelques variantes du système de couplage.

Dans l'exemple de réalisation de la figure 1, les moyens de couplage relient des moyens d'attache flexibles réalisés par quatre poutres 19, 20 associés respectivement à quatre bras flexibles 4, 5 ; le point d'attache de chaque poutre à chacun des bras formant un pivot.

Les moyens de couplage comprennent en outre dans ce mode de réalisation deux ensembles de deux poutres intermédiaires 21, 22 et d'une poutre médiane 23, 24 reliant respectivement les moyens d'attaches 19, 20 au support rigide en assurant un transfert de mouvement d'un des pivots vers l'autre du même ensemble.

Se reportant à la figure 1, on voit que la structure admet deux axes de symétrie, l'axe vu horizontal XOX étant l'axe d'oscillation et l'axe vu vertical YOY étant l'axe de rotation de la structure dans le cas où celle-ci est un gyromètre.

On trouve deux oscillateurs 1 et 2 dont chacun comprend une masse centrale 3 reliée par une paire de bras 4 et 5 flexibles en prolongement dans l'axe YOY (et ici par une seconde paire de bras 6 et 7 flexibles également en prolongement et parallèles aux précédentes) à des éléments de support rigide 8 et 9 de la structure dont la rigidité est très grande par rapport à celle des bras 4, 5, 6 et 7. Tout en formant un support rigide des bras 4 à 7, le support rigide 8 et 9 est suspendu à des points d'ancrage 10 et 11 d'un substrat sous-jacent par des attaches 12 et 13. Les attaches 12 et 13, situées sur l'axe YOY, permettent au support rigide 8 et 9 de pivoter autour de cet axe. Les éléments décrits jusqu'à présent sont en général conducteurs. Les masses 3 sont hérissées d'électrodes mobiles 14 s'étendant dans la direction XOX et dans les entre-deux desquelles pénètrent des électrodes fixes 15, d'un moteur 16, 16bis ou d'un capteur de déplacement 17, 17bis : les électrodes 14 et 15 composant des peignes interdigités permettent d'imposer des forces électrostatiques et des accélérations aux masses 3 ; les vibrations sont produites en faisant alterner des forces d'attraction entre les moteurs 16 et les masses 3 ; le capteur 17 permet de mesurer les déplacements des masses 3 d'après les variations de capacité du condensateur formé entre les électrodes 14 et 15. Ici, les moteurs 16 et 16bis sont sur les côtés externes des oscillateurs 2 et les capteurs 17 et 17bis sont placés entre eux mais l'inverse serait possible. Les capteurs 17 et 17bis pourraient être communs. Dans le cas inverse où les moteurs 16 et 16bis seraient placés au centre, ils pourraient également être communs. Les capteurs 17 et 17bis peuvent ne pas être utilisés ou être utilisés également comme moteur. Ici une différence de potentiel significative, appliquée entre les électrodes 14 et 15 des moteurs 16 et 16bis pendant une demi-période de l'oscillation des masses 3, provoque l'oscillation des masses 3. On peut utiliser aussi les capteurs 17 et 17bis comme moteur. Dans ce cas on applique une différence de potentiel significative entre les électrodes 14 et 15 pendant l'autre demi-période de l'oscillation des masses 3. Ce n'est pas obligatoire car l'effet ressort des bras 4, 5, 6, 7 intervient également dans l'oscillation des masses 3. Des moteurs d'autre nature (électromagnétique, piézoélectrique, etc.) sont concevables.

Les mouvements d'attraction entre les électrodes 14 et 15, qui font osciller les masses 3 sur l'axe XOX en faisant fléchir les bras 4, 5, 6 et 7 dont la raideur est faible, peuvent être commandés à une fréquence et une différence de phase quelconques. Dans le cas d'un gyromètre, les mouvements des masses 3 sont en opposition de phase et on mesure les déplacements des masses 3 dans la direction perpendiculaire à la figure pour en déduire la vitesse de rotation autour de l'axe YOY à laquelle est soumise la structure ; des surfaces conductrices 18 sont établies sur le substrat sous-jacent par exemple au-dessous des masses 3 pour mesurer les variations de capacité correspondantes. On ne s'étendra pas davantage sur ces techniques de mise en oscillation et de mesures déjà bien connues.

Les dispositions que voici sont plus spécifiques à l'invention. Les bras 4 et 5 ne sont pas fixés directement au support rigide 8 et 9, mais par l'intermédiaire de moyen d'attache composés de poutres d'attache 19 et 20, qui leur sont perpendiculaires (orientées dans l'axe XOX), flexibles mais pas obligatoirement rectilignes : des formes incurvées sont possibles. Les bras 4 et 5 sont prolongés au-delà des poutres d'attache 19 et 20 par des poutres intermédiaires 21 et 22 qui finissent par rejoindre des poutres médianes 23 et 24 respectives, elles aussi flexibles, orientées dans l'axe XOX et dont les extrémités sont fixées au support rigide 8 et 9. Chaque poutre médiane 23 ou 24 relie une paire des poutres intermédiaires 21 et 22 et forme avec elles une interconnexion de paires de bras 4 et 5 des deux oscillateurs 1 et 2. Les poutres 19, 21 et 23 comme 20, 22 et 24 sont agencées dans des évidements 25 et 26 du support rigide 8 et 9, et ces évidements peuvent présenter des extensions 27 afin d'accroître la longueur des poutres médianes 23 et 24 et donc leur souplesse. Plus généralement, les évidements 25 et 26 peuvent avoir toute forme et toute taille appropriée.

Les poutres d'attache 19 et 20 se prêtent à des déformations qui font que les bras 4 et 5 se conduisent sensiblement comme s'ils étaient montés sur le support rigide 8 et 9 par l'intermédiaire de pivots. La figure 2 illustre -en les exagérant- les déformations observées pendant un instant d'une oscillation des masses 3 en opposition de phase : les masses 3 sont écartées, les bras 4 et 5 fléchissent et produisent une flexion sur les poutres d'attache 19 et 20, qui restent dans cet exemple perpendiculaires au voisinage des joints d'attache des bras 4 et 5 auxquels elles sont fixées. Une flexion est également produite sur les poutres médianes 23 et 24, dont les centres se rapprochent et s'éloignent alternativement. La flexion des poutres médianes 23 et 24 est de forme simple, à ventre central unique et qui absorbe donc une énergie de déformation modérée. Si des mouvements non exactement en opposition de phase étaient imposés, ils produiraient des déformations de forme plus complexe sur les poutres médianes. Les poutres médianes des figures 1 et 2 sont donc plus raides à l'égard de ces mouvements et les laissent moins facilement apparaître.

La figure 3 illustre une autre situation, où les poutres médianes 23 et 24 liées par leurs extrémités au support rigide 8 et 9 sont remplacées par des poutres médianes 28 de jonction des poutres intermédiaires 21 et 22, sans contact avec le support rigide 8 et 9 : la déformation du système de poutres est alors moindre pour les mouvements en phase, car les poutres médianes 28 ne sont presque pas déformées. Un tel système sera donc plus sensible aux excitations produisant de tels mouvements, et pourra être préféré pour d'autres applications que les gyromètres.

On a représenté des exemples de réalisations où les masses 3 sont reliées par leurs deux côtés au support rigide 8 et 9 par des poutres et bras de montage (poutres + bras, 4, 6, 19, 21, 23, etc. et 5, 7, 20, 22, 24, etc.) symétriques, ce qui n'est pas indispensable ; en effet, les poutres et bras de montage pourraient être différents, ou même prévus d'un seul côté.

Les figures 4, 5 et 6 illustrent quelques variantes de réalisation. La figure 4 montre que les masses 3 peuvent être reliées au support rigide 8 ou 9 par plusieurs bras 4 rattachés à autant de poutres d'attache 19 en formant chacune un pivot selon le principe déjà expliqué ; les bras 4 sont prolongées par des poutres intermédiaire 21 respectives qui sont reliées à la poutre médiane 23. On voit à la figure 5 que les poutres intermédiaires 21 prolongeant les bras 4 de support des masses 3 et s'étendant entre les poutres d'attache 19 et la poutre médianes 23 ne sont pas nécessairement obliques mais peuvent être alignées avec les bras 4. Enfin, la figure 6 montre que les poutres d'attache 19 peuvent être incurvées et plus généralement avoir toute forme ou orientation compatible avec la faculté de fléchir pour fonctionner en pivot.

## Revendications

1. Structure vibrante comprenant :
- un support rigide (8, 9, 10, 11) ;
- deux oscillateurs (1, 2) comprenant chacun : une masse (3) oscillant dans une direction d'oscillation (XOX) incluse dans un plan d'oscillation (XOX-YOY) ; des bras flexibles (4) reliés à la masse (3) ; et des moyens d'attache flexibles (19, 20) des bras flexibles au support rigide ; **caractérisée par** des moyens de couplage des masses (21, 22) comprenant des poutres reliant leurs moyens d'attache flexibles respectifs ; où les moyens d'attache flexibles sont reliés aux bras flexibles et aux moyens de couplage à des pivots.

2. Structure selon la revendication 1, **caractérisée en ce que** les moyens d'attache flexibles comprennent des poutres flexibles perpendiculaires aux bras flexibles et les moyens de couplage comprennent une poutre médiane (23, 24) perpendiculaire aux bras flexibles et comprenant des poutres intermédiaires reliant la poutre médiane aux moyens d'attache flexibles.

3. Structure vibrante selon la revendication 2, **caractérisée en ce que** la poutre médiane est reliée par des extrémités au support rigide.

4. Structure vibrante selon la revendication 1, **caractérisée en ce que** les moyens de couplage comprennent deux poutres intermédiaires (21) prolongeant des extrémités des bras flexibles et une poutre médiane (23, 24, 28) reliant les poutres intermédiaires entre elles.

5. Structure vibrante selon la revendication 4, **caractérisée en ce que** les poutres intermédiaires sont obliques par rapport à la poutre médiane.

6. Structure vibrante selon la revendication 4, **caractérisée en ce que** la poutre médiane (23, 24) se prolonge au-delà des poutres intermédiaires (21, 22) et est fixée par des extrémités au support rigide.

7. Structure vibrante selon la revendication 1, 2, 3 ou 6, **caractérisée en ce que** les moyens de couplage sont disposés dans un évidement (25, 26) du support rigide.

8. Structure vibrante selon les revendications 4 et 7, **caractérisée en ce que** des extrémités de la poutre médiane s'étendent dans des extensions (27) de l'évidement (25, 26).

## Claims

1. Vibrating structure comprising:
- a rigid support (8, 9, 10, 11);
- two oscillators (1, 2) each comprising a mass (3) oscillating in an oscillation direction (XOX) included in an oscillation plane (XOX-YOY), flexible arms (4) connected to the mass (3) and flexible attachment means (19, 20) for attaching the flexible arms to the rigid support, **characterized by** mass coupling means (21, 22) comprising beams linking their respective flexible attachment means, which are connected to the flexible arms and to the coupling means forming pivots.

2. Vibrating structure according to claim 1, **characterized in that** the flexible attachment means comprise flexible beams perpendicular to the flexible arms and the coupling means comprise a median beam (23, 24) perpendicular to the flexible arms and comprising intermediate beams linking the median arm with the flexible attachment means.

3. Vibrating structure according to claim 2, **characterized in that** the median beam is connected by ends to the rigid support.

4. Vibrating structure according to claim 1, **characterized in that** the coupling means comprise two intermediate beams (21) extending ends of flexible arms and a median beam (23, 24, 28) interconnecting the intermediate beams.

5. Vibrating structure according to claim 4, **characterized in that** the intermediate beams are oblique relative to the median beam.

6. Vibrating structure according to claim 4, **characterized in that** the median beam (23, 24) is extended beyond the intermediate beams (21, 22) and is fixed by ends to the rigid support.

7. Vibrating structure according to claims 1, 2, 3 or 6, **characterized in that** the coupling means are placed in a cutout (25, 26) of the rigid support.

8. Vibrating structure according to claims 4 and 7, **characterized in that** ends of the median beam extend in extensions (27) of cutout (25, 26).

## Patentansprüche

1. Vibrationsstruktur, umfassend:
- einen steifen Träger (8, 9, 10, 11);
- zwei Oszillatoren (1, 2), jeder umfassend: eine Masse (3), oszillierend in einer in einer Oszillationsebene (XOX-YOY) enthaltenen Oszillationsrichtung (XOX); flexible Arme (4), verbunden mit der Masse (3); und flexible Befestigungseinrichtungen (19, 20) der flexiblen Arme an dem steifen Träger; **gekennzeichnet durch** Massenkopplungseinrichtungen (21, 22), Balken umfassend, die ihre jeweiligen flexiblen Befestigungseinrichtungen verbinden; wo die mit den flexiblen Armen und den Kopplungseinrichtungen verbundenen flexiblen Befestigungseinrichtungen Gelenkeinrichtungen bilden.

2. Struktur nach Anspruch 1, **dadurch gekennzeichnet, dass** die flexiblen Befestigungseinrichtungen flexible Balken senkrecht zu den flexiblen Armen umfassen, und die Kopplungseinrichtungen einen Mittelbalken (23, 24) umfassen, senkrecht zu den flexiblen Armen und Zwischenbalken umfassend, die den Mittelbalken mit den flexiblen Befestigungseinrichtungen verbinden.

3. Vibrationsstruktur nach Anspruch 2, **dadurch gekennzeichnet, dass** der Mittelbalken durch Enden mit dem steifen Träger verbunden ist.

4. Vibrationsstruktur nach Anspruch 1, **dadurch gekennzeichnet, dass** die Kopplungseinrichtungen zwei Zwischenbalken (21) umfassen, die Enden der flexiblen Arme verlängern, und einen Mittelbalken (23, 24, 28), der die Zwischenbalken miteinander verbindet.

5. Vibrationsstruktur nach Anspruch 4, **dadurch gekennzeichnet, dass** die Zwischenbalken schräg sind in Bezug auf den Mittelbalken.

6. Vibrationsstruktur nach Anspruch 4, **dadurch gekennzeichnet, dass** der Mittelbalken (23, 24) sich über die Zwischenbalken (21, 22) hinaus verlängert und durch Enden an dem steifen Träger befestigt ist.

7. Vibrationsstruktur nach Anspruch 1, 2, 3 oder 6, **dadurch gekennzeichnet, dass** die Kopplungseinrichtungen in einer Aussparung (25, 26) des steifen Trägers angeordnet sind.

8. Vibrationsstruktur nach den Ansprüchen 4 und 7, **dadurch gekennzeichnet, dass** Enden des Mittelbalkens sich in Erweiterungen (27) der Aussparung (25, 26) hinein erstrecken.
